# EUROPEAN PATENT SPECIFICATION

(11) **EP 2 561 330 B1**
(45) Date of publication and mention of the grant of the patent: **05.08.2015**
(21) Application number: 11712600.3
(22) Date of filing: 09.03.2011
(51) Int. Cl.: G01M 13/04, F16C 17/24

(54) **BEARING ARRANGEMENT, METHOD FOR DETECTING WEAR OF A BEARING SURFACE IN A BEARING ARRANGEMENT AND USE OF A BEARING ARRANGEMENT**
LAGERANORDNUNG, VERFAHREN ZUR ERKENNUNG DES VERSCHLEISSES EINER LAGERFLÄCHE BEI EINER LAGERANORDNUNG UND VERWENDUNG EINER LAGERANORDNUNG
AGENCEMENT DE PALIER, MÉTHODE DE DÉTECTION D'USURE D'UNE SURFACE D'APPUI DANS UN AGENCEMENT DE PALIER, ET UTILISATION D'UN AGENCEMENT DE PALIER

(30) Priority: 20.04.2010 FI 20105421
(43) Date of publication of application: 27.02.2013
(73) Proprietor: Wärtsilä Finland Oy, 65380 Vaasa (FI)
(72) Inventor: NORDMAN, Tom, FI-65280 Vaasa (FI)
(74) Representative: Berggren Oy Ab
(86) International application number: PCT/FI2011/050204
(87) International publication number: WO 2011/131826

(56) References cited:
- DE-A1-102005 059 165
- GB-A- 2 192 949
- US-A- 3 897 116

## Description

### Technical field of the invention

The present invention relates to a bearing arrangement comprising a first part having a bearing surface, a second part having a surface being made of an electrically conductive material and being arranged in sliding contact with the bearing surface of the first part, and means for detecting wear of the bearing surface, as defined in the preamble of claim 1.

The present invention also relates to a method for detecting wear of a bearing surface in a bearing arrangement as defined in the preamble of claim 9 and to the use of a bearing arrangement in a turbocharger of an internal combustion engine as defined in claim 12.

### Background of the invention

Bearings are common machine parts that are used everywhere where there are parts moving in relation to each other. The movement is often rotating or linear, but the path of movement could also be different, for instance arc-like. There are different types of bearings for different applications, ranging from tiny jewel bearings used in watches to very large bearings used in heavy machinery or in the supporting structures of bridges and other constructions.

The lifetime of a bearing depends on many things, such as the type of movement, load and the conditions where the bearing is used. The lifetime of a bearing can be estimated with certain accuracy, but the exact lifetime of a bearing cannot be known beforehand. In many applications, a bearing failure can cause big damage. For instance in a turbocharger for an internal combustion engine, a failed bearing may mean that not only the failed bearing, but the whole turbocharger needs to be replaced. Naturally, this is usually much more expensive than replacing a bearing before its failure. A bearing could be replaced with a new one in good time before its estimated lifetime expires, but this would lead to higher costs due to needed extra work and spare parts. Also, in many cases this would lead to unwanted and expensive extra shutdowns.

An ideal situation would be having an arrangement that would monitor the condition of a bearing and allow replacing of the bearing before it fails, but not too early.

Different systems for monitoring bearing wear have been developed. Patent application publication US 2007/0017280 A1 discloses an apparatus for monitoring bearing wear in a large two-stroke internal combustion engine. The apparatus comprises two proximity sensors that are used to detect the position of a guide shoe at the bottom dead center of its stroke. The detected positions of the guide shoe over time are compared to get an indication of bearing wear. This kind of apparatus gives only an indirect indication of the condition of the bearings and is suitable only for a limited range of applications. In addition, this kind of apparatus requires calibration for different engine temperatures, speeds and loads.

Patent publication US 6,080,982 A discloses another system for detecting bearing wear. According to the publication, fiber optic filaments are embedded at the bearing surface. The filaments wear as the surface wears; and based on the observed amount of light which is transmitted through the filaments, the wear of the bearing surface can be determined. Drawbacks of this kind of system include that the properties of fiber optic filaments limit the applications where the system can be used. For instance, fiber optic filaments have certain minimum bend radius, which determines the minimum radius of the shafts to which the filaments can be applied. Also the heat resistance of filaments can be a limiting factor when considering different applications for the system.

Another prior art document is DE102005059165.

### Summary of the invention

The objective of the present invention is to provide an improved bearing arrangement that comprises means for detecting wear of a bearing surface. Another objective of the present invention is to provide a method for detecting wear of a bearing surface in a bearing arrangement. The characterizing features of the bearing arrangement according to the present invention are given in the characterizing part of claim 1. The characterizing features of the method according to the present invention are given in the characterizing part of claim 10. Characterizing features of the use according to the present invention are given in claim 13.

A bearing arrangement according to the present invention comprises a first part having a bearing surface, and a second part having a surface being made of an electrically conductive material and being arranged in sliding contact with the bearing surface of the first part. The bearing arrangement also comprises means for detecting wear of the bearing surface, the means comprising a sensor being arranged in the first part, which sensor is made at least partly of an electrically conductive material and comprises a first area and a second area. The first area is electrically connected to the surface of the second part so that an open electrical circuit is formed when the bearing surface is intact, and when the bearing surface wears down to a certain predefined thickness, the second area of the sensor comes into electrical contact with the surface of the second part closing the electrical circuit. The means for detecting wear of the bearing surface further comprise means for detecting closing of the electrical circuit.

The bearing arrangement according to the present invention has a simple and inexpensive construction and can be used in various applications. It provides reliable means for detecting bearing failures in time and avoiding high repairing costs. It can be used either for manual monitoring of bearing condition or be a part of a fully automated monitoring system.

According to the present invention, a method for detecting wear of a bearing surface in a bearing arrangement comprising a first part having a bearing surface and a second part having a surface being made of an electrically conductive material and being arranged in sliding contact with the bearing surface of the first part comprises the step of providing the first part with a sensor being at least partly made of an electrically conductive material and comprising a first area and a second area, which first area is electrically connected to the surface of the second part so that an open electrical circuit is formed when the bearing surface is intact, and when the bearing surface wears down to a certain predefined thickness, the second area of the sensor comes into electrical contact with the surface of the second part closing the electrical circuit. The method further comprises the step of detecting closing of the electrical circuit.

According to an embodiment of the present invention, the means for detecting closing of the electrical circuit comprise means for measuring resistance between the sensor and the surface of the second part. According to another embodiment of the present invention, the electrical circuit comprises a voltage source and the means for detecting closing of the electrical circuit comprise means for measuring current in the electrical circuit.

Other features of the embodiments of the present invention are listed in the dependent claims.

### Brief description of the drawings

Fig. 1 shows schematically a cross-sectional view of a thrust bearing arrangement according to the present invention.
Fig. 2 shows schematically a cross-sectional view of another thrust bearing arrangement according to the present invention.
Fig. 3 shows schematically a cross-sectional view of another type of bearing arrangement according to the present invention.
Fig. 4 shows schematically a partial cross-sectional view of still another type of bearing arrangement according to the present invention.

### Detailed description of the invention

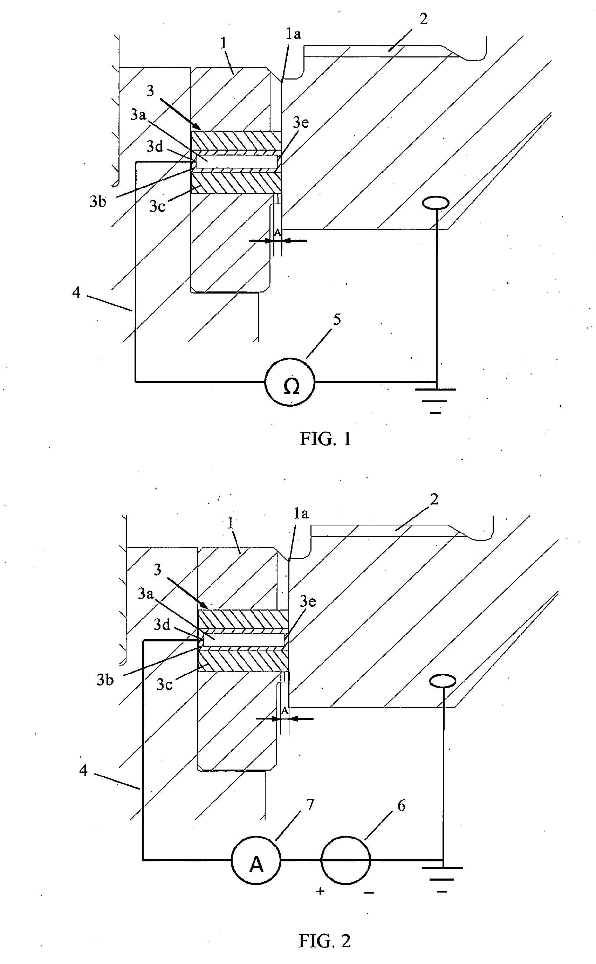

Some embodiments of the present invention are now described with reference to the accompanying drawings. Fig. 1 shows an embodiment of the invention in connection with a thrust bearing. The bearing arrangement in Fig. 1 is designed for allowing a rotary movement between two parts and for carrying axial loads. The bearing arrangement could be used for instance for supporting the main shaft of a turbocharger for an internal combustion engine, but this kind of bearing arrangements could be used in many other applications as well.

The bearing arrangement comprises a first part 1, which is stationary, and a second part 2, which is a thrust collar arranged to be in sliding contact with the first part 1. The first part 1 has a bearing surface 1a, against which the thrust collar 2 rotates. In many applications, it is desirable to arrange lubrication between the first part 1 and the second part 2, but it is not necessary in all cases. The material of the first part 1, the bearing surface 1a and the thrust collar 2 depends on the application where the bearing arrangement is used. The material of the first part 1 needs to be hard enough for the application in question and have sufficient mechanical strength to withstand the loads it must carry. The material of the first part 1 also has to be chosen so that it has sufficient chemical, pressure and heat resistance for the application where the bearing arrangement is used. In many applications, the first part 1 is preferably made of an alloy, such as steel, but also many other materials, such as different polymers, composite materials or even wood may be suitable for many applications.

Same materials as those used in the first part 1 are also suitable for the thrust collar 2. However, for the working of the invention, it is necessary that at least the part of the surface of the thrust collar 2 that slides against the bearing surface 1a of the first part 1 is made of an electrically conductive material. Therefore, alloys such as steel are often the most suitable materials for the thrust collar 2. If the body of the thrust collar 2 is made of a material that is electrically non-conductive, the thrust collar 2 can be coated with an electrically conductive material. It is also possible to coat only that part of the surface of the thrust collar 2 that is in contact with the bearing surface 1 a.

The bearing surface 1a of the first part 1 is preferably made of a material that is wear resistant and has a low coefficient of friction against the thrust collar 2. In many cases, it is also preferable that the bearing surface 1a is made of a softer material than the material of the thrust collar 2 so that the bearing surface 1a wears faster than the thrust collar 2. Suitable materials for the bearing surface 1a are for example different metals and alloys, such as copper based alloys, aluminum based materials or white metals. Also non-metal materials, such as carbon-graphite or different plastics may be suitable, depending on the application. The selection of material for the bearing surface depends on the use of the bearing arrangement. Different speeds, loads, temperatures and other conditions, as well as the possibilities to arrange lubrication, affect the selection of the materials. The whole first part 1 can be made of the same material, or alternatively the body of the first part 1 is different material than the bearing surface 1a.

Inside the first part 1 there is arranged a sensor 3 having a sensor core 3a made of an electrically conductive material. The material of the sensor core 3a could be a metal or an alloy, but also other electrically conductive solid materials can be used. In the embodiment of Fig. 1, the sensor comprises also an insulating layer 3b, which electrically insulates the core 3a from the first part 1. The insulating layer 3b is arranged around the sensor core 3a and covers both ends of the sensor core 3a. The insulating layer 3b is made of an electrically non-conductive material, such as a suitable polymer. The sensor core 3a and the insulating layer 3b are mounted inside a sensor body 3c that is used to fasten the sensor 3 to the first part 1. The sensor body 3c can be made of any material having suitable mechanical properties for a fastening part. The material can be either electrically conductive or non-conductive.

The sensor body 3c and insulating layer 3b are not necessarily essential parts of a bearing arrangement according to the present invention. If the first part 1 is made of an electrically non-conductive material, it is not necessary to have the insulating layer 3b. If the sensor core 3a has a suitable structure and material, the sensor body 3c is not needed, but the sensor core 3a can form the whole sensor 3 and be mounted directly to the first part 1. It is also possible that the sensor body 3c and the insulating layer 3b are the same part. The insulating layer 3b is also redundant in case the first part 1 is not in electrical contact with the surface of the thrust collar 2. This requires that at least the bearing surface 1a is made of an electrically non-conductive material and that either the first part 1 or the thrust collar 2 is electrically insulated from the frame of the device where the bearing arrangement is used. This would be the case for instance when the thrust collar 2 is made of an electrically non-conductive material and only the surface that is in contact with the bearing surface 1a is electrically conductive. However, in most cases it is preferable to insulate the sensor core 3a from the first part 1.

The sensor core 3a has at its one end a first area 3d and at its other end a second area 3e. The first area is electrically connected to the surface of the thrust collar 2. In the embodiment of Fig. 1, this connection is implemented using a conductor 4. As shown in Fig. 1, the thrust collar 2 is also connected to ground. If the first part 1 is made of an electrically conductive material, and the sensor core 3a is not electrically insulated from the first part 1, the conductor 4 can be connected to the first part 1 instead of the sensor core 3a. It is also possible to connect the conductor 4 to some other location in the construction where the bearing arrangement is used, if that part is electrically connected to the sensor core 3a.

In the embodiment shown in Fig. 1, the sensor 3 is arranged inside the first part 1 so that the other end of the sensor body 3c and the insulating layer 3b are parallel to the bearing surface 1a. The other end of the sensor core 3a is at the distance A from the surface of the thrust collar 2. Distance A is set so that it is the maximum allowed wear of the bearing surface 1a. For instance, if the bearing surface 1a is allowed to wear two millimeters, the distance A of the other end of the sensor core 3c from the thrust collar 2 is set to be two millimeters. When the thrust collar 2 rotates against the bearing surface 1a, the bearing surface 1a gradually wears. As soon as the bearing surface 1a has worn enough, the electrically conductive sensor core 3a is revealed and the second area 3e is brought in contact with the surface of the thrust collar 2 so that a closed electrical circuit is formed.

In Fig. 1 is shown an elongated sensor 3, but the shape of the sensor 3 could also be different. For instance, the sensor core 3a could be a metal plate, where the other face would form the first area 3d and the other face the second area 3e.

In the electrical circuit, there are arranged means for detecting closing of the circuit. In the case of the embodiment shown in Fig. 1, the means are an ohmmeter 5. When the electrical circuit is open, the ohmmeter 5 shows an infinite resistance, and when the circuit is closed, its reading drops close to zero. There are also other ways to detect closing of the circuit. For instance, in the embodiment of Fig. 2, the electrical circuit comprises a voltage source 6, and a current meter 7 is used to detect closing of the circuit. In an open electrical circuit, there is no current and the current meter 7 shows zero current. When the circuit is closed, the current meter 7 shows a higher reading, the exact reading depending on the voltage and resistance in the circuit.

Depending on the application where the bearing arrangement is used, different actions can be taken when closing of the circuit is detected. In an application with a relatively low load and speed, it might be sufficient to have the means that detect closing of the circuit outside the device where the bearing arrangement is used, and the condition of the bearing surface is checked for instance daily. If it is noticed that the bearing surface has worn to the predefined thickness, the device is stopped and the worn parts are replaced.

In other applications, where a worn bearing surface may cause severe damage to the bearing arrangement and/or to the whole device where the bearing arrangement is used, it might be preferable that the electrical circuit is connected to a system that generates a warning signal and the operator of the device can stop the device. In some cases, it might be preferable that the device automatically shuts down when closing of the electrical circuit is detected.

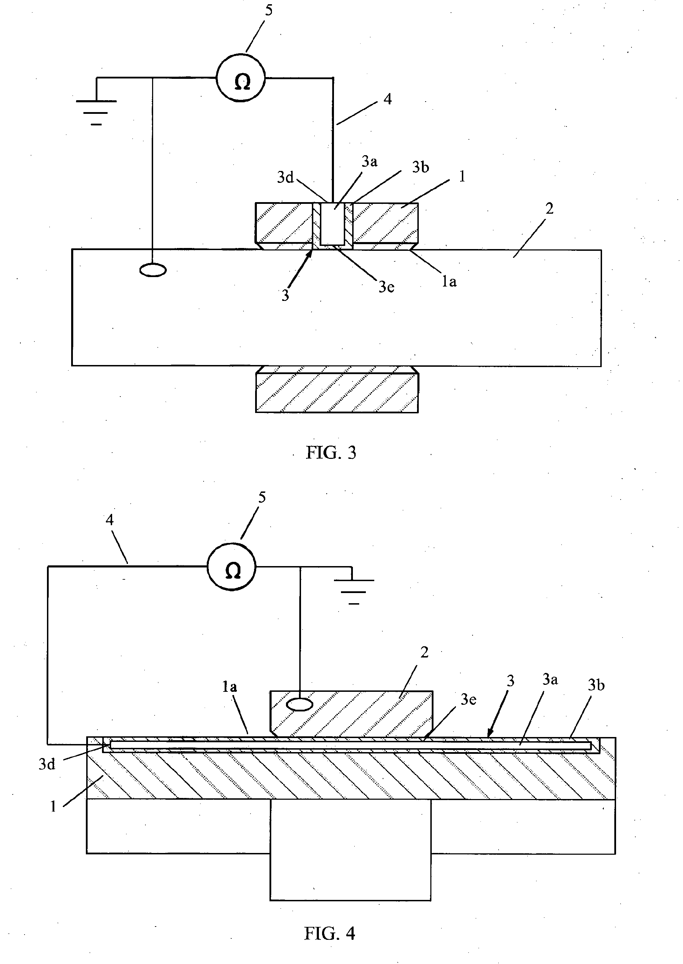

Same kind of wear detection means can also be used in other kinds of bearing arrangements than thrust bearings arrangements. In Fig. 3 is shown another embodiment of the invention, where the first part 1 is a sleeve supporting the second part 2, which is a shaft arranged in sliding contact with the sleeve 1. The shaft 2 could be either in a rotating or linear movement in relation to the sleeve 1. In the embodiment of Fig. 3, the sensor 3 comprises a sensor core 3a and an insulating layer 3b, but not a sensor body. Otherwise the bearing arrangement functions in the same manner as the bearing arrangement of Fig. 1. In Fig. 3, there is shown an ohmmeter 5 for detecting closing of the electrical circuit, but it will be appreciated by those skilled in the art, that also a current meter or some other device could be used instead of an ohmmeter.

Fig. 4 shows still another embodiment of the present invention. In the embodiment of Fig. 4, the first part 1 is a shaft having the bearing surface 1a arranged on its outer surface. The second part 2 is a sleeve that is arranged in sliding contact with the first part 1. The movement could be either rotational or linear. Fig. 4 shows how the sensor 3, comprising a sensor core 3a and an insulating layer 3b is arranged inside the shaft. The sensor 3 and the bearing surface 1a are arranged on almost the whole length of the shaft 1, but especially in case of rotary movement, they could be arranged only on a shorter section of the shaft 1. Even if the bearing arrangement was designed for linear movement, the sensor 3 could be located at one spot. The operating principle of the bearing arrangement is the same as that of the bearing arrangement of Fig. 1. In this embodiment, the first area 3d is at the end of the sensor 3 and the second area 3e is on the long side of the sensor 3.

It will be appreciated by those skilled in the art that the electrical circuits are presented only schematically in the drawings. Thus, it is not necessary to place a conductor close to that part of the surface of the second part, which is in contact with the bearing surface of the first part. If the second part is made of an electrically conductive material, a conductor can be fastened to any point in the second part. In some cases, it is not necessary to have any conductor fastened to the second part, but some part of the construction where the bearing arrangement is used is utilized as a conducting element. It is also clear that the sensor can be arranged either in the stationary or the moving part of a bearing arrangement. Many other modifications of the present invention are possible within the scope of the appended claims.

## Claims

1. A bearing arrangement comprising a first part (1) having a bearing surface (1a) and a second part (2) having a surface being made of an electrically conductive material and being arranged in sliding contact with the bearing surface (1a) of the first part (1), the bearing arrangement further comprising means for detecting wear of the bearing surface, which means for detecting wear of the bearing surface comprise a sensor (3) being arranged in the first part (1), which sensor (3) is made at least partly of an electrically conductive material and comprises a first area (3d) and a second area (3e), which first area (3d) is electrically connected to the surface of the second part (2) so that an open electrical circuit is formed when the bearing surface (1a) is intact, and when the bearing surface (1a) wears down to a certain predefined thickness, the second area (3e) of the sensor (3) comes into contact with the electrically conductive surface of the second part (2) that is in sliding contact with the bearing surface (1a) closing the electrical circuit, the means for detecting wear of the bearing surface further comprising means for detecting closing of the electrical circuit, **characterized in that** the electrically conductive part of the sensor (3) is electrically insulated from the first part (1).

2. A bearing arrangement according to claim 1, **characterized in that** the means for detecting closing of the electrical circuit comprise means (5) for measuring the resistance between the sensor (3) and the surface of the second part (2).

3. A bearing arrangement according to claim 1, **characterized in that** the electrical circuit comprises a voltage source (6), and the means for detecting closing of the electrical circuit comprise means (7) for measuring the current in the circuit.

4. A bearing arrangement according to any of claims 1-3, **characterized in that** the sensor (3) comprises an electrically conductive sensor core (3a) and an insulating layer (3b) being arranged around the sensor core (3a).

5. A bearing arrangement according to any of claims 1-4, **characterized in that** the sensor (3) comprises a sensor body (3c) that is used to fasten the sensor (3) to the first part (1).

6. A bearing arrangement according to any of claims 1-5, **characterized in that** the second part (2) is a thrust collar, and the bearing surface (1a) of the first part (1) is arranged to carry the axial load transmitted by the thrust collar.

7. A bearing arrangement according to any of claims 1-5, **characterized in that** the first part (1) is a shaft and the second part (2) is a sleeve, and the bearing surface (1a) of the first part (1) is arranged to carry the radial load transmitted by the sleeve.

8. A bearing arrangement according to any of claims 1-5, **characterized in that** the second part (2) is a shaft and the first part (1) is a sleeve having the bearing surface (1a) on the inner surface and being arranged around the shaft to carry radial loads.

9. A method for detecting wear of a bearing surface (1a) in a bearing arrangement, which bearing arrangement comprises a first part (1) having a bearing surface (1a) and a second part (2) having a surface being made of an electrically conductive material and being arranged in sliding contact with the bearing surface (1a) of the first part (1), **characterized in that** the first part (1) is provided with a sensor (3) being at least partly made of an electrically conductive material, the electrically conductive part of the sensor (3) being electrically insulated from the first part (1), the sensor (3) comprising a first area (3d) and a second area (3e), which first area (3d) is electrically connected to the surface of the second part (2) so that an open electrical circuit is formed when the bearing surface (1a) is intact, and when the bearing surface (1a) wears down to a certain predefined thickness, the second area (3e) of the sensor (3) comes into contact with the electrically conductive surface of the second part (2) that is in sliding contact with the bearing surface (1a) closing the electrical circuit, and closing of the electrical circuit is detected.

10. A method according to claim 9, **characterized in that** resistance between the sensor (3) and the surface of the second part (2) is measured to detect closing of the electrical circuit.

11. A method according to claim 9, **characterized in that** voltage is supplied to the electrical circuit and current in the circuit is measured to detect closing of the circuit.

12. Use of a bearing arrangement according to any of claims 1-7 in a turbocharger for an internal combustion engine.

## Patentansprüche

1. Lageranordnung, welche ein erstes Teil (1), das eine Lagerfläche (1a) aufweist, und ein zweites Teil (2), das eine Fläche aufweist, die aus einem elektrisch leitenden Material hergestellt ist und in gleitendem Kontakt mit der Lagerfläche (1a) des ersten Teils (1) angeordnet ist, umfasst, wobei die Lageranordnung ferner Mittel zur Erkennung von Verschleiß der Lagerfläche umfasst, wobei diese Mittel zur Erkennung von Verschleiß der Lagerfläche einen in dem ersten Teil (1) angeordneten Sensor (3) umfassen, wobei dieser Sensor (3) wenigstens teilweise aus einem elektrisch leitenden Material hergestellt ist und einen ersten Bereich (3d) und einen zweiten Bereich (3e) umfasst, wobei der erste Bereich (3d) mit der Fläche des zweiten Teils (2) elektrisch verbunden ist, so dass ein offener Stromkreis gebildet wird, wenn die Lagerfläche (1a) intakt ist, und wobei, wenn sich die Lagerfläche (1a) bis zu einer gewissen vordefinierten Dicke abnutzt, der zweite Bereich (3e) des Sensors (3) mit der elektrisch leitenden Fläche des zweiten Teils (2) in Kontakt kommt, welcher sich in gleitendem Kontakt mit der Lagerfläche (1a) befindet, und den Stromkreis schließt, wobei die Mittel zur Erkennung von Verschleiß der Lagerfläche ferner Mittel zur Erkennung des Schließens des Stromkreises umfassen, **dadurch gekennzeichnet, dass** der elektrisch leitende Teil des Sensors (3) von dem ersten Teil (1) elektrisch isoliert ist.

2. Lageranordnung nach Anspruch 1, **dadurch gekennzeichnet, dass** die Mittel zur Erkennung des Schließens des Stromkreises Mittel (5) zum Messen des Widerstands zwischen dem Sensor (3) und der Fläche des zweiten Teils (2) umfassen.

3. Lageranordnung nach Anspruch 1, **dadurch gekennzeichnet, dass** der Stromkreis eine Spannungsquelle (6) umfasst und die Mittel zur Erkennung des Schließens des Stromkreises Mittel (7) zum Messen des Stroms in dem Stromkreis umfassen.

4. Lageranordnung nach einem der Ansprüche 1-3, **dadurch gekennzeichnet, dass** der Sensor (3) einen elektrisch leitenden Sensorkern (3a) und eine Isolierschicht (3b), die um den Sensorkern (3a) herum angeordnet ist, umfasst.

5. Lageranordnung nach einem der Ansprüche 1-4, **dadurch gekennzeichnet, dass** der Sensor (3) einen Sensorkörper (3c) umfasst, welcher verwendet wird, um den Sensor (3) an dem ersten Teil (1) zu befestigen.

6. Lageranordnung nach einem der Ansprüche 1-5, **dadurch gekennzeichnet, dass** das zweite Teil (2) ein Druckbund ist und die Lagerfläche (1a) des ersten Teils (1) dafür ausgelegt ist, die axiale Last zu tragen, die von dem Druckbund übertragen wird.

7. Lageranordnung nach einem der Ansprüche 1-5, **dadurch gekennzeichnet, dass** das erste Teil (1) eine Welle ist und das zweite Teil (2) eine Hülse ist und die Lagerfläche (1a) des ersten Teils (1) dafür ausgelegt ist, die radiale Last zu tragen, die von der Hülse übertragen wird.

8. Lageranordnung nach einem der Ansprüche 1-5, **dadurch gekennzeichnet, dass** das zweite Teil (2) eine Welle ist und das erste Teil (1) eine Hülse ist, welche die Lagerfläche (1a) auf der Innenfläche aufweist und um die Welle herum angeordnet ist, um radiale Lasten zu tragen.

9. Verfahren zur Erkennung von Verschleiß einer Lagerfläche (1a) in einer Lageranordnung, wobei diese Lageranordnung ein erstes Teil (1), das eine Lagerfläche (1a) aufweist, und ein zweites Teil (2), das eine Fläche aufweist, die aus einem elektrisch leitenden Material hergestellt ist und in gleitendem Kontakt mit der Lagerfläche (1a) des ersten Teils (1) angeordnet ist, umfasst, **dadurch gekennzeichnet, dass** das erste Teil (1) mit einem Sensor (3) versehen ist, der wenigstens teilweise aus einem elektrisch leitenden Material hergestellt ist, wobei der elektrisch leitende Teil des Sensors (3) von dem ersten Teil (1) elektrisch isoliert ist, wobei der Sensor (3) einen ersten Bereich (3d) und einen zweiten Bereich (3e) umfasst, wobei der erste Bereich (3d) mit der Fläche des zweiten Teils (2) elektrisch verbunden ist, so dass ein offener Stromkreis gebildet wird, wenn die Lagerfläche (1a) intakt ist, und wobei, wenn sich die Lagerfläche (1a) bis zu einer gewissen vordefinierten Dicke abnutzt, der zweite Bereich (3e) des Sensors (3) mit der elektrisch leitenden Fläche des zweiten Teils (2) in Kontakt kommt, welcher sich in gleitendem Kontakt mit der Lagerfläche (1a) befindet, und den Stromkreis schließt, und das Schließen des Stromkreises erkannt wird.

10. Verfahren nach Anspruch 9, **dadurch gekennzeichnet, dass** der Widerstand zwischen dem Sensor (3) und der Fläche des zweiten Teils (2) gemessen wird, um das Schließen des Stromkreises zu erkennen.

11. Verfahren nach Anspruch 9, **dadurch gekennzeichnet, dass** der Stromkreis mit Spannung versorgt wird und der Strom im Stromkreis gemessen wird, um das Schließen des Stromkreises zu erkennen.

12. Verwendung einer Lageranordnung nach einem der Ansprüche 1-7 in einem Turbolader für eine Brennkraftmaschine.

## Revendications

1. Agencement de palier comprenant une première pièce (1) ayant une surface d'appui (1a) et une deuxième pièce (2) ayant une surface étant faite d'un matériau électroconducteur et étant agencé en contact coulissant avec la surface d'appui (1a) de la première pièce (1), l'agencement de palier comprenant en plus un moyen de détection d'usure de la surface d'appui, lequel moyen de détection d'usure de la surface d'appui comprend un capteur (3) étant disposé dans la première pièce (1), lequel capteur (3) est fait au moins partiellement d'un matériau électroconducteur et comprend une première zone (3d) et une deuxième zone (3e), laquelle première zone (3d) est connectée électriquement à la surface de la deuxième pièce (2) de telle manière qu'un circuit électrique ouvert est formé lorsque la surface d'appui (1a) est intacte et lorsque la surface d'appui (1a) s'use à une dcertaine épaisseur prédéfinie, la deuxième zone (3e) du capteur (3) entre en contact avec la surface électroconductrice de la deuxième pièce (2) qui est en contact coulissant avec la surface d'appui (1a) fermant le circuit électrique, le moyen de détection d'usure de la surface d'appui comprenant en plus un moyen de détection de fermeture du circuit électrique **caractérisé en ce que** la pièce électroconductrice du capteur (3) est électriquement isolée de la première pièce (1).

2. Agencement de palier selon la revendication 1 **caractérisé en ce que** le moyen de détection de fermeture du circuit électrique comprend un moyen (5) pour mesurer la résistance entre le capteur (3) et la surface de la deuxième pièce (2).

3. Agencement de palier selon la revendication 1 **caractérisé en ce que** le circuit électrique comprend une source de tension (6) et le moyen de détection de fermeture du circuit électrique comprend un moyen (7) pour mesurer le courant dans le circuit.

4. Agencement de palier selon l'une quelconque des revendications 1-3 **caractérisé en ce que** le capteur (3) comprend un noyau de capteur électroconducteur (3a) et une couche isolante (3b) étant disposée autour du noyau de capteur (3a).

5. Agencement de palier selon l'une quelconque des revendications 1-4 **caractérisé en ce que** le capteur (3) comprend un corps de capteur (3c) qui est utilisé pour fixer le capteur (3) à la première pièce (1).

6. Agencement de palier selon l'une quelconque des revendications 1-5 **caractérisé en ce que** la deuxième pièce (2) est un collier de butée et la surface d'appui (1a) de la première pièce (1) est agencée pour supporter la charge axiale transmise par le collier de butée.

7. Agencement de palier selon l'une quelconque des revendications 1-5 **caractérisé en ce que** la première pièce (1) est un arbre et la deuxième pièce (2) est un manchon et la surface d'appui (1a) de la première pièce (1) est agencée pour supporter la charge radiale transmise par le manchon.

8. Agencement de palier selon l'une quelconque des revendications 1-5 **caractérisé en ce que** la deuxième pièce (2) est un arbre et la première pièce (1) est un manchon ayant la surface d'appui (1a) sur la surface intérieure et étant agencée autour de l'arbre pour supporter les charges radiales.

9. Méthode de détection d'usure d'une surface d'appui (1a) dans un agencement de palier, lequel agencement de palier comprend une première pièce (1) ayant une surface d'appui (1a) et une deuxième pièce (2) ayant une surface étant faite d'un matériau électroconducteur et étant agencée en contact coulissant avec la surface d'appui (1a) de la première pièce **caractérisée en ce que** la première pièce (1) est munie d'un capteur (3) étant au moins partiellement fait d'un matériau électroconducteur, la pièce électroconductrice du capteur (3) étant électriquement isolée de la première pièce (1), le capteur (3) comprenant une première zone (3d) et une deuxième zone (3e), dont la première zone (3d) est électriquement connectée à la surface de la deuxième pièce (2)de telle manière qu'un circuit électrique ouvert est formé lorsque la surface d'appui (1a) est intacte et lorsque la surface d'appui (1a) s'use à une certaine épaisseur prédéfinie, la deuxième zone (3e) du capteur (3) entre en contact avec la surface électroconductrice de la deuxième pièce (2) qui est en contact coulissant avec la surface d'appui (1a) fermant le circuit électrique et la fermeture du circuit électrique est détectée.

10. Méthode selon la revendication 9 **caractérisée en ce que** la résistance entre le capteur (3) et la surface de la deuxième pièce (2) est mesurée pour détecter la fermeture du circuit électrique.

11. Méthode selon la revendication 9 **caractérisé en ce que** la tension est fournie au circuit électrique et le courant dans le circuit est mesuré pour détecter la fermeture du circuit.

12. Utilisation d'un agencement de palier selon l'une quelconques des revendications 1-7 dans un turbocompresseur pour un moteur à combustion interne.
